# EUROPEAN PATENT APPLICATION

(11) **EP 2 503 658 A1**
(43) Date of publication of application: **26.09.2012**
(21) Application number: 12160409.4
(22) Date of filing: 20.03.2012
(51) Int. Cl.: H02H 7/06, H02H 7/08

(54) **Shorting protection for systems having electric machines**

(30) Priority: 24.03.2011 US 201113070776
(71) Applicant: General Electric Company, Schenectady, New York 12345 (US)
(72) Inventor: Larsen, Einar Vaughn, Schenectady, NY New York 12345 (US)
(74) Representative: Cleary, Fidelma

(57) **Abstract**

Shorting protection for systems having electric machines is provided. A protective device (130) is put in shunt with an electric power system (105) and an electric machine (110). The protective device (130) is in an open state during normal operation and in a closed state in response to detection of a fault. In the closed state, the protective device (130) forms a short circuit that isolates the electric power system (105) from the electric machine (110).

## Description

### BACKGROUND OF THE INVENTION

The present invention relates generally to electric machines, and more particularly to providing shorting protection to systems utilizing electric machines.

Power generation is one example of a system that utilizes electric machines. In one power generation application, an electric machine (e.g., a generator) can be used to generate electrical energy that drives a load. In another power generation application, the electric machine may be a motor load driven by a power system. In either application, when a grid fault occurs during operation, the electric machine has inherent stored energy in both the magnetic field and rotating inertia that will force current into the fault in the electrical grid for a brief period of time (i.e., until the magnetic field is reduced to zero or the rotating inertia comes to a stop). For example, if there is a line-line arcing fault between the power system and the electric machine, then the machine will supply current to that fault even if the supply is opened by a protective device such as a circuit breaker or fuse. Because the electric machine will continue to supply current to the fault, the machine and the portion of the circuit between the power system circuit breaker cannot be satisfactorily protected.

### BRIEF DESCRIPTION OF THE INVENTION

The present invention resides in a system comprising an electric machine; an electric machine control system connected to the electric machine; an electric power system that supplies power to the electric machine and the electric machine control system; and a protective device in shunt with the electric machine and the electric machine control system. The protective device is in an open state during normal operation and in a closed state in response to detection of a fault to form a short circuit that isolates the electric power system from the electric machine control system and the electric machine.

The system may comprise an electrical connector joining the electric machine to the electric machine control system and the protective device may comprise a circuit breaker coupled to the electrical connector, the circuit breaker being in a closed state in response to determining that current in the electric machine needs to be diverted away from electric power system.

The system may further include a series-connected protective device placed between the electric power system and the electric machine control system.

### BRIEF DESCRIPTION OF THE DRAWINGS

Embodiments of the present invention will now be described, by way of example only, with reference to the accompanying drawings in which:
FIG. 1 is a schematic diagram of a system for providing shorting protection to an electric power system and an electric machine according to one embodiment of the present invention; and
FIG. 2 is a schematic diagram of a system for providing shorting protection to an electric power system and an electric machine according to another embodiment of the present invention.

### DETAILED DESCRIPTION OF THE INVENTION

Various embodiments of the present invention are directed to providing shorting protection of systems having electric machines. In these embodiments, a protective device is put in shunt with an electric power system and an electric machine. The protective device is in an open state during normal operation and in a closed state in response to detection of a fault. In the closed state, the protective device forms a short circuit that isolates the electric power system from the electric machine. In one embodiment, the protective device may be a circuit breaker, a switch or any other type of current limiting protection device. When the protective device is in the closed state, a short circuit is formed between the electric power system and the electric machine, which prevents current from flowing into the electric power system from the electric machine.

In another embodiment of the present invention, an impedance can be placed in series with the protective device to further limit current flowing from the electric machine to a predetermined current value in order to enhance the electric machine's ability to tolerate the short circuit. This is useful in the case that the machine cannot fully tolerate a direct short.

Technical effects of the various embodiments of the present invention include providing a low-impedance path that is in shunt with the electric power system and the electric machine in order to mitigate any fault that arises between the electric power system and the electric machine, including any faults within the machine. This low-impedance path created by the short circuit minimizes the damage caused by current in the fault path. Another technical effect associated with the low-impedance path provided by the configuration of putting the protective device in shunt with the electric power system and the electric machine is that the protective device can be rated to carry only fault current for a brief period of time and will not introduce additional losses during normal operation.

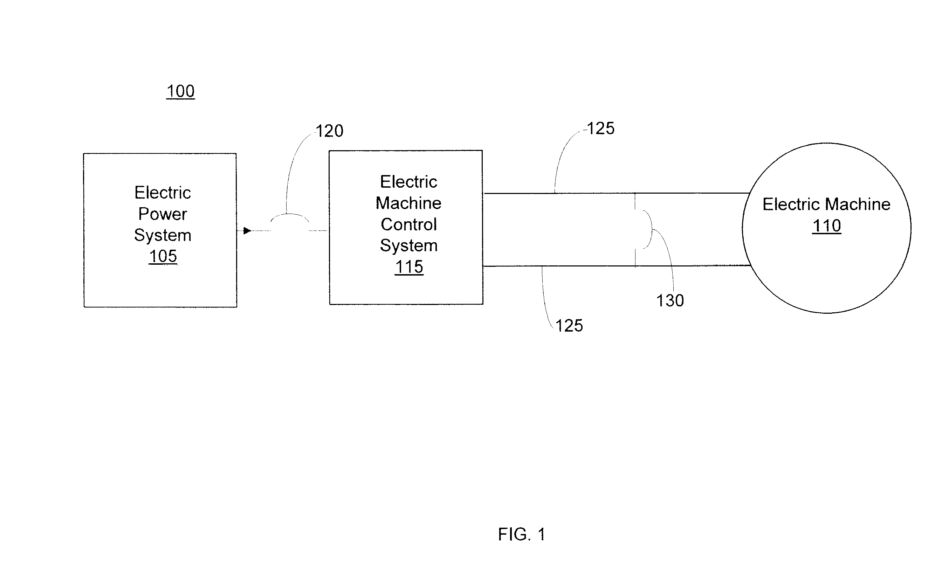

Referring to the drawings, FIG. 1 is a schematic diagram of a system 100 for providing shorting protection to an electric power system 105 and an electric machine 110 according to one embodiment of the present invention. As shown in FIG. 1, system 100 comprises an electric power system 105 coupled to an electric machine 110 and an electric machine control system 115 that controls the machine.

In one embodiment, electric machine 110 may be a generator that can be used to generate electrical energy that drives electric power system 105. In another embodiment, electric machine 110 may be a motor load driven by electric power system 105.

In one embodiment, electric machine control system 115 may be an on/off switch that operates a circuit breaker placed between electric power system 105 and the machine control system, or it may be a power-electronic motor drive system.

FIG. 1 shows that a protective device 120 such as a circuit breaker or fuse is placed in series with electric power system 105 and the circuit formed by electric machine control system 115 and electric machine 110. In a closed state, protective device 120 maintains the connection of electric power system 105 to electric machine 110 and electric machine control system 115. If a fault occurs, protective device 120 is in an open state to isolate electric power system 105 from electric machine 110 and electric machine control system 115. For ease of illustrating the various embodiments of the present invention, only one segment of electric power system 105 is disclosed. Those skilled in the art will recognize that electric power system 105 may have additional segments that are connected to the power system by a respective protective device 120.

As shown in FIG. 1, system 100 further includes an electrical connector 125 that joins electric machine 110 and electric machine control system 115 to form the circuit around the machine control system and the machine. A protective device 130 is coupled to electrical connector 125 in shunt with electric machine 110 and electric machine control system 115. In one embodiment, electrical connector 125 may be formed from conductors such as cables, bus bars or wires that complete a circuit around electric machine 110 and electric machine control system 115. In one embodiment, protection device 130 may be a switch, circuit breaker or any other type of current limiting protection device (e.g., "Is limiters" or "CLIP") may be used, as long as they can provide the necessary degree of current limitation.

In operation, protective device 130 is in an open state during normal operation of electric power system 105, electric machine 110 and electric machine control system 115. Protective device 130 is in a closed state in response to detection of a fault that arises in the portion between protective device 120 and protective device 130. Generally, detection of a fault that arises in the portion between protective device 120 and protective device 130 is characterized by a determination that current in electric machine 110 needs to be diverted away from electric power system 105. When in a closed state, protective device 130 forms a short circuit between electric power system 105, electric machine 110 and electric machine control system 115 that isolates the power system from the machine and the machine control system. In particular, the short circuit provides a low-impedance path for the fault current to flow, thereby preventing current from flowing into electric power system 105 from electric machine 110 and electric machine control system 115. This prevents the transient energy from electric machine 110 from being dissipated via a fault on the portion between protective device 120 and protective device 130. Note that the protection provided by system 100 will generally cause protective device 130 to close and protective device 120 to open, although there may be other features within electric machine control system 115 that can perform the isolation function of protective device 120 so that it can remain closed.

Because of the low-impedance path provided by putting protective device 130 in shunt with electric machine 110 and electric machine control system 115, the protective device can be rated to carry only fault current for a brief period of time, ensuring that additional losses during normal operation of system 100 are not introduced. Those skilled in the art will appreciate that creating a short circuit will not damage electric machine 110 because there are certain cases when a machine can tolerate the short circuit in protective actions. For example, such cases exist with permanent magnet machines where the fault current is not much higher than load current.

Previous approaches in handling faults that arise between electric power system 105, electric machine 110 and electric machine control system 115 have relied on placing a series-connected protective device between the machine and the machine control system. There are several disadvantages of having a series-connected protective device between electric machine 110 and electric machine control system 115. One is that a series-connected protective device carries current continuously so it must be rated appropriately; meaning cooling requirements and circuit losses. Another disadvantage is that a series-connected protective device must break load current on a fault, so it must have a voltage withstand rating corresponding to at least twice that of the nominal voltage on the circuit, and probably three to four times the nominal voltage considering transient effects. The shorting features associated with having protective device 130 in shunt with electric machine 110 and electric machine control system 115 overcomes the disadvantages of having a series-connected protective device between the machine and the machine control system.

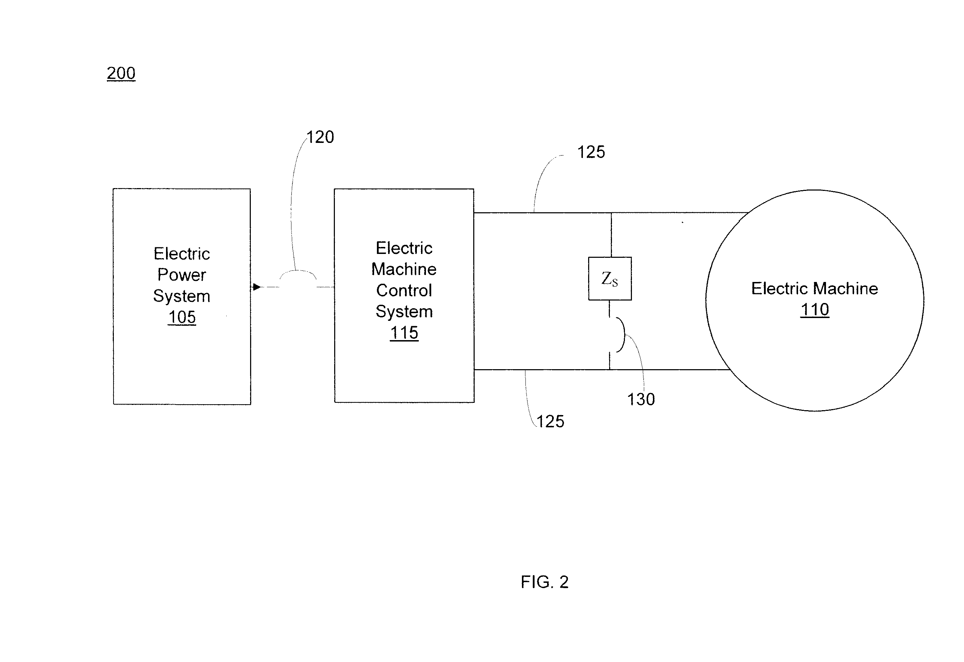

FIG. 2 is a schematic diagram of a system 200 for providing shorting protection to electric power system 105 and electric machine 110 according to another embodiment of the present invention. In this embodiment, an impedance Zs is placed in series with protective device 130 in order to limit current flowing from electric machine 110 to a predetermined current value that enhances tolerance of the short circuit by the electric machine. Placing impedance Zs in series with protective device 130 is useful in enhancing the electric machine's ability to tolerate the short circuit in case machine 110 cannot fully tolerate a direct short.

While the disclosure has been particularly shown and described in conjunction with a preferred embodiment thereof, it will be appreciated that variations and modifications will occur to those skilled in the art. Therefore, it is to be understood that the appended claims are intended to cover all such modifications and changes as fall within the true spirit of the disclosure.

## Claims

1. A system (100), comprising:
an electric machine (110);
an electric machine control system (115) connected to the electric machine (110);
an electric power system (105) that supplies power to the electric machine (110) and the electric machine control system (115); and
a protective device (130) in shunt with the electric machine (110) and the electric machine control system (115), wherein the protective device (130) is in an open state during normal operation and in a closed state in response to detection of a fault to form a short circuit that isolates the electric power system (105) from the electric machine control system (115) and the electric machine (110).

2. The system (100) according to claim 1, further comprising a series-connected protective device (120) placed between the electric power system (105) and the machine control system (115).

3. The system (100) according to claim 1 or 2, wherein the protective device (130) includes a circuit breaker.

4. The system (100) according to claim 1 or 2, wherein the protective device (130) includes a switch.

5. The system (100) according to any of claims 1 to 4, wherein the electric machine (110) includes a generator.

6. The system (100) according to any of claims 1 to 5, wherein the electric machine (110) includes an electric motor load.

7. The system (200) according to any preceding claim, further comprising an impedance in series with the protective device (130).

8. The system (100) of claim 3, further comprising:
an electrical connector (125) joining the electric machine (110) to the electric machine control system (115);
wherein the circuit breaker (130) is coupled to the electrical connector (125), the electric machine (110) and the electric machine control system (115), the circuit breaker (130) being in a closed state in response to determining that current in the electric machine (110) needs to be diverted away from electric power system (105).

9. The system (200) according to any preceding claim, further comprising an impedance in series with the protective device (130) that limits current flowing from the electric machine (110) in order to enhance tolerance of the short circuit by the electric machine (110).
